(19) Europäisches Patentamt
European Patent Office
Office européen des brevets

(11) **EP 2 939 889 B1**

(12) **EUROPEAN PATENT SPECIFICATION**

(45) Date of publication and mention
of the grant of the patent:
**26.12.2018 Bulletin 2018/52**

(51) Int Cl.:
***B60T 8/1755*** (2006.01)

(21) Application number: **14166606.5**

(22) Date of filing: **30.04.2014**

(54) **A vehicle safety system**

Fahrzeugsicherheitssystem

Système de sécurité de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.11.2015 Bulletin 2015/45**

(73) Proprietor: **Autoliv Development AB
447 83 Vargarda (SE)**

(72) Inventors:
• **Zin, Alessandro
95310 St Quen l'Aumone (FR)**

• **Laoufi, Moroine
92600 Asnieres-sur-siene (FR)**

(74) Representative: **Beattie, Alex Thomas Stewart
Forresters IP LLP
Skygarden
Erika-Mann-Strasse 11
80636 München (DE)**

(56) References cited:
**WO-A1-90/06251    DE-A1- 10 109 580
DE-A1- 19 813 736    DE-A1- 19 832 484
US-B1- 6 349 256**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a vehicle safety system, and in particular concerns a system which may assist in reducing the likelihood of vehicle over-steer.

Over-steer is a well-known phenomenon in which, when a vehicle attempts to turn, the vehicle's rear wheels slip more than the vehicle's front wheels, causing the vehicle to rotate about its yaw axis, so that the nose of vehicle swings towards the centre of curvature of the turn (i.e. when negotiating a left-hand turn, over-steer will cause the nose of the vehicle to turn left excessively).

In serious instances of over-steer, the vehicle may turn around entirely, or almost entirely, so that the vehicle is travelling substantially backwards.

In front-engined vehicles, the weight of the engine is generally applied primarily to the front wheels, and the front wheels will therefore experience greater downforce than the rear wheels. This can be a contributing factor to the loss of traction in the rear wheels before loss of traction occurs at the front wheels.

In rear-engined cars, greater weight (leading to greater downforce) is present over the rear wheels. However, in these circumstances the lateral momentum of the heavy engine at the rear of the car can "drag" the rear wheels sideways during a sharp turn, again causing the rear wheels to lose traction before the front wheels.

Many modern vehicles have active systems which detect the likelihood of over-steer, and implement countermeasures. These systems typically apply braking forces to the vehicle's wheels. Braking forces may be applied individually to the various wheels in a manner determined by an on-board processor.

Generally, in attempting to reduce the likelihood of over-steer, braking forces will be applied to the wheels on the outer side of the turn (i.e. in a left-hand turn, braking forces will be applied to the wheels on the right-hand side of the vehicle).

DE 198 32 484 discloses methods and devices for detecting a corner, especially an oversteered corner, and to a method and a device for stabilising a vehicle on an oversteered corner. The corner is detected using wheel slip values and/or transversal acceleration values. The vehicle is stabilised according to the results by means of appropriate intervention in the brake system.

It is the object of the present of present invention to provide an improved system of this type.

Accordingly, one aspect of the present invention provides a method to reduce the likelihood of over-steer in a vehicle during a turn as defined in claim 1 hereinafter.

According to another aspect of the present invention, there is provided a computer program as defined in claim 9 hereinafter.

According to a further aspect of the present invention, there is provided a computer as defined in claim 10 hereinafter.

According to another aspect of the present invention, there is provided a vehicle as defined in claim 12 hereinafter.

In order that the invention may be more readily understood embodiments thereof will now be described, by a way of example, with reference to the accompanying drawings, in which:

Figure 1 shows a vehicle involved in a turn;

Figure 2 shows a relationship between lateral force and slip angle for a vehicle tyre;

Figure 3 shows a relationship between slip angle and yaw moment for a vehicle tyre; and

Figure 4 shows a series of relationships between slip ratio and lateral force for a vehicle tyre.

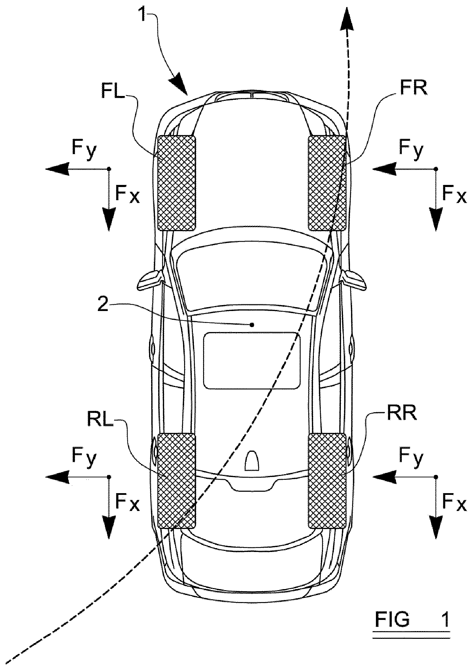

With reference firstly to figure 1, a schematic view is shown of a vehicle 1 negotiating a left-hand turn. A dotted line indicates the path of the vehicle 1.

The vehicle 1 has left and right front wheels FL, FR and left and right rear wheels RL, RR.

At each of the four wheels, forces act between the wheel and the road surface. In figure 1, a schematic view is shown of the forces that act between the road surface and each wheel. In figure 1 (and other figures, where applicable) the direction generally parallel with the longitudinal axis of the vehicle 1 (i.e. the normal "forward" direction of the vehicle 1) is designated by x. The direction which is parallel to the vehicle's longitudinal axis is indicated by y.

If the vehicle 1 is negotiating a left-hand turn, as shown in figure 1, then a force in the x direction will act between each wheel on the road, in a direction which will tend to reduce the forward speed of the vehicle 1. These forces arise from friction between the wheel and the road surface, and may be increased by braking forces applied to the wheel.

A force in the y direction will also act at each wheel, either in the positive or negative direction, arising from the fact that the vehicle is negotiating a turn.

The vehicle has a yaw moment, which is the turning moment of the vehicle around the vehicle's yaw axis. Following convention, in the figures a positive yaw moment is in a clockwise direction, and a negative yaw moment is in an anticlockwise direction.

Considering figure 1 if, during a left-hand turn, the rear wheels RL, RR of the vehicle 1 lose traction with the road surface the vehicle 1 will rotate in an anticlockwise direction, and hence will have an undesirably negative yaw moment. In order to reduce the likelihood of over-steer occurring, it is necessary to increase the vehicle's yaw moment (it will be understood that if the vehicle 1 was turning in the other direction, it would be necessary to decrease the yaw moment to reduce the likelihood of over-steer).

It will be understood that the forces acting on the right-hand front and rear wheels FR, RR in the x direction will increase the vehicle's yaw moment - both of these forces tend to rotate the vehicle in a clockwise direction around the vehicle's centre of gravity 2, leading to a positive yaw moment adjustment (YMA).

The negative y force (i.e. acting to the left in figure 1) acting at the right rear wheel RR will also tend to increase the vehicle's yaw moment. However, the negative y force acting at the front right wheel FR tends to rotate the vehicle in an anticlockwise direction around its centre of gravity 2, thus decreasing the vehicle's yaw moment.

It can also be seen that the x forces acting on the left-hand wheels FL, RL of vehicle 1 will both tend to decrease the yaw moment, i.e. cause the vehicle to rotate in an anticlockwise direction around its centre of gravity 2.

The negative y force acting at the left rear wheel RL will tend to increase the vehicle's yaw moment and, conversely, the negative y force acting at the left front wheel FL will tend to decrease the vehicle's yaw moment.

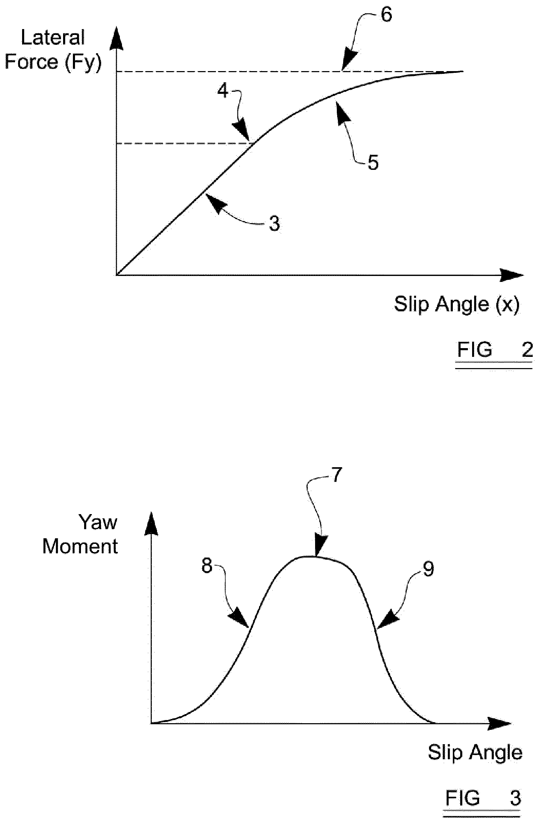

As will be known to those skilled in the art, during a turn such as that shown in figure 1 each wheel will have a slip angle. The slip angle is generally defined as the angle between the direction in which each wheel is pointing and the direction in which it is actually travelling. With reference to figure 2, a typical characteristic curve for a vehicle tyre is shown. In this figure, the x-axis represents the slip angle and the y-axis represents the lateral force (i.e. at right angles to the "forward" direction of the tyre) which act on the tyre.

It can be seen that, at relatively low levels of lateral force, there is a substantially linear relationship between the lateral force and the slip angle. This linear region is indicated by reference numeral 3 in figure 2. After a first threshold 4 of lateral force has been exceeded, the relationship between the lateral force and the slip angle becomes substantially non-linear, with the slip angle increasing at a greater rate with respect to the lateral force. This non-linear region is indicated by reference numeral 5 in figure 2.

When the lateral force reaches a further threshold 6, the tyre will slip with respect to the road surface. This point is known as "loss of adhesion" (LoA).

When braking is applied to a wheel of a vehicle, the wheel has a slip ratio, which relates to the locking status of the wheel. The slip ratio is generally calculated using the formula:

$$Slip\ ratio(\%) = \frac{vehicle\ speed - wheel\ speed}{vehicle\ speed} \times 100$$

It will be understood that the vehicle speed may be calculated, for example, from information from a positioning system (such as a GPS system), and that wheel speed may be calculated from measurements made by wheel rotation sensors. The information required to calculate the slip ratio for a wheel is therefore readily available from the sensors provided in a modern vehicle.

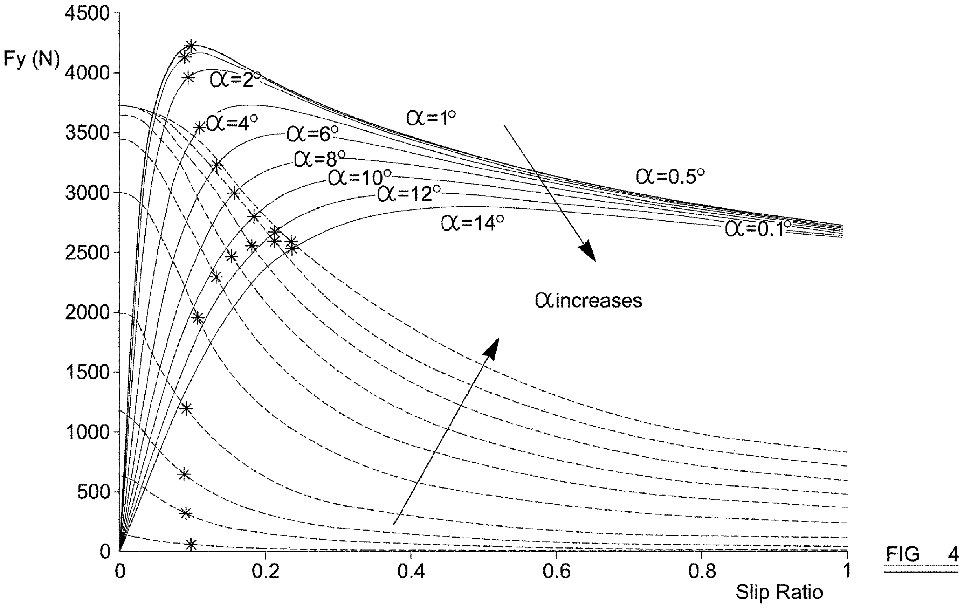

Referring to figure 4, a graph is shown of a generic example for a set tyre, load and grip margin (i.e. coefficient of friction between the tyres and the road surface). Both slip angle and slip ratio are shown on the same axes. This graph shows how, as the tyre slip angle increases, the optimum slip ratio also increases.

We now consider the optimum slip ratio for a wheel that will maximise the yaw moment provided by that wheel. Clearly, when considering the effect of the front and rear outer wheels in a situation where over-steer may potentially occur, it may be useful to maximise the yaw moment provided by these wheels.

Referring to figure 3, a schematic graph is shown of the relationship between slip angle and yaw moment for the right rear wheel of the vehicle 1 shown in figure 1.

It can be seen that the graph has a peak value, indicated by 7. At the region (indicated by 8) where the slip angle is less than this peak value, the tyre will have a good level of traction with the road surface, but the forces involved are relatively low and the yaw moment applied by the wheel could be greater if greater lateral forces were applied to the wheel.

In the region 9 of the graph representing higher slip angle, the yaw moment applied by the wheel is relatively low because the wheel is slipping excessively with respect to the road surface.

It can be seen that the maximum point 7 represents a stationary point on the graph and it may therefore be said that, for the maximum yaw moment (YM),

$$\frac{\partial YM}{\partial slip} = 0$$

Still concentrating on the right rear wheel of the vehicle, the yaw moment provided by the wheel is given by:

$$YM_{RR} = Fx_{RR}.tr + Fy_{RR}.b$$

Where Fx and Fy are the forces acting in the x and y directions. In this equation, tr represents the lateral distance between the centre of gravity and the position on the right-hand side of the vehicle 1 which is longitudinally aligned with the right-hand wheels of the vehicle 1. b represents the distance between the centre of gravity 2 and the vehicle's rear axle. It will be understood that these distances are included in the equation because the turning moment arising from a force is equal to the magnitude of the force multiplied by the distance at which the force acts from the centre of rotation.

As previously discussed the yaw moment will be at its maximum when:

$$\frac{\partial YM}{\partial slip} = 0$$

And hence when:

$$\frac{\partial Fx_{RR}.tr}{\partial slip} = -\frac{\partial Fy_{RR}.b}{\partial slip}$$

This effectively states that, at the maximum yaw moment, the ratio of force to slip angle in the x direction is proportional to the ratio of force to slip angle in the y direction.

It can be concluded from this that, referring to figure 2, the optimum slip angle must lie in the linear region of the force/slip angle graph, i.e. the region in which lateral force is proportional to slip angle.

It can also be concluded that the optimum slip ratio must also be situated on the linear region of the force/slip angle graph. In other words, the optimum slip ratio will occur when the slip angle lies on the linear region of this graph.

It has been found that the linear region of the graph extends to a point at which the slip ratio is around 50%-70% (as calculated using the formula for slip ratio given above). Therefore, the optimum slip ratio is determined to be (exactly or approximately) the ratio corresponding to the largest slip angle which lies on the linear region of the force/slip angle graph. The optimum slip ratio when regular vehicle tyres are used will therefore be around 50%-70%.

Examples of braking control involved in the present invention will now be described.

As a first step in the process, it is necessary to determine whether over-steer is likely to occur, or has began to occur. To do so, a vehicle processor may take into account the slip angle at each wheel. Methods for calculating slip angle are known in the art (for instance, suitable methods are disclosed in US6223116), and will not be discussed in detail in this specification.

The process may also take into account the speed of the vehicle (measured, for example, by wheel rotation sensors and/or a positioning system such as a GPS system), longitudinal and/or lateral acceleration of the vehicle (as measured by inertial sensors, some or all of which may be located at or near the vehicle's centre of gravity), and also signals from control sensors which may sense the angle of the steering wheel, and also the level of depression of the accelerator and/or brake pedals.

If it is determined that an over-steer situation is occurring, or is likely to occur, a correcting algorithm is initiated.

In embodiments of the invention, the algorithm checks whether the wheel slip ratio of the rear outer wheel is lower than a first threshold.

In preferred embodiments, this first threshold is around 5%-20%. More preferably, the first threshold is around 10%-15%. In one example the first threshold value is around 15%

If the wheel slip ratio value of the rear outer wheel is lower than this first threshold value, the wheel slip ratio of the front outer wheel is considered.

The algorithm then checks whether the slip ratio of the front outer wheel is below a second threshold. In preferred embodiments, this second threshold is around 50%-70%, corresponding to the optimum slip ratio value (discussed above).

In preferred embodiments, the second threshold is around 55%-65%. In one example, the second threshold is around 60%.

In the example described above, the first threshold is lower than the slip ratio value discussed and calculated above. This is because, for control of over-rotation, when applying braking forces to the front outer wheel, the goal is to reduce the lateral forces at the front axle, and this can be achieved most effectively with a slip ratio between around 50%-70%. However, when applying braking forces to the rear outer wheel, the goal is to maximise the longitudinal braking force.

Returning to the example shown in figure 4, the slip angle and slip ratio figures given in this figure are for the outer rear wheel of a vehicle. The following values were produced by this simulation:

| Slip angle (°) | Optimum slip ratio (%) |
| --- | --- |
| 0.1 | 9.6 |
| 0.5 | 9.1 |
| 1 | 8.6 |
| 2 | 9.1 |
| 4 | 10.6 |
| 6 | 13.1 |
| 8 | 15.6 |
| 10 | 18.1 |
| 12 | 21.1 |
| 14 | 23.6 |

Therefore, to maximise the longitudinal braking at the rear axle, this can be achieved most effectively (depending on the state and condition of the outer rear tyre) with a slip ratio between around 5%-20%.

Since the goals are different for the front and rear outer wheels, different slip ratio thresholds are set.

If the slip ratio of the front outer wheel is less than the second threshold, it is determined that the front outer wheel is not "saturated", i.e. that greater braking force can be applied to the front outer wheel to generate a greater yaw moment.

If the slip ratio of the front outer wheel is less than the second threshold, additional braking is applied to the front outer wheel, but is not applied to the rear outer wheel.

In this step, it is determined that the application of additional braking to the front outer wheel can produce an effective yaw moment to counteract the over-steer, and the algorithm therefore applies additional braking to the front outer wheel but not to the rear outer wheel.

Doing so, compared to the application of additional braking to both the front outer wheel and the rear outer wheel means that the vehicle speed will be reduced by a lesser degree. This is desirable, since clearly it is better to lose as little of the vehicle's forward momentum as possible in the correction process.

If, alternatively, the slip ratio of the front wheel is greater than the second threshold and a greater yaw moment adjustment is requested by the vehicle's electronic stability control system, it is determined that the application of additional braking force to the front outer wheel will not reliably generate any further significant yaw moment to counteract the over-steer. In this case, additional braking force is applied to the front outer wheel and the rear outer wheel, in order to generate an additional yaw moment to counteract the detected over-steer.

Here it can be seen that additional braking is applied to both the front outer wheel and to the rear outer wheel, and this will unavoidably reduce the forward speed of the vehicle by a greater amount. However, the application of braking to both of the wheels on the outer side of the vehicle is applied only when it is determined that the application of braking force only to the front outer wheel will not be a sufficient measure to reduce the over-steer situation reliably.

It will be understood that embodiments of the invention allow effective correction of over-steer without excessive reduction in the vehicle's overall forward speed. This will be useful with regard to safety and economy, and during the course of controlled high-speed driving.

As the vehicle continues to negotiate a corner, the additional braking that is applied to the wheels may be adjusted. For instance, when it is first determined that the vehicle is in a situation in which over-steer may occur, the vehicle's processor may determine that the slip ratio at the front outer wheel is below the second threshold and hence additional braking may be applied to the front outer wheel but not to the rear outer wheel. As the vehicle continues, it may be found that the slip ratio at the front outer wheel increases to a value which exceeds the second threshold. At this stage, additional braking may be applied to both the front outer wheel and the rear outer wheel.

Similarly, at the start of a turn additional braking may be needed at both the front outer wheel and the rear outer wheel but, as the vehicle continues to negotiate the turn, it may be determined that additional braking is only needed at the front outer wheel.

The slip ratios of the various wheels may be monitored continuously or periodically, with the additional braking being adjusted in response to the detected slip ratios.

In some embodiments, when additional braking is applied to one or both of the front and rear outer wheels, the braking is applied in such a way as to reach a target slip ratio for that wheel. The target slip ratio may be the value of slip ratio for which the yaw moment adjustment for that wheel is at a maximum value, and in preferred embodiments the target slip ratio is the first or second threshold, as appropriate. In this way, when it is determined that additional braking is to be used to try to prevent over-steer from occurring, the maximum possible yaw adjustment can be applied by each wheel to which additional braking is applied.

The skilled reader will appreciate how, through monitoring of the slip ratio at a wheel, the level of additional braking may continuously or adaptively be adjusted so that the slip ratio at the wheel reaches, and is maintained at, the target value.

In this specification, the application of additional braking to one or more wheels by a vehicle control system is discussed. This additional braking refers to further braking that is applied over and above any braking that may already be applied to that wheel, e.g. by the use of the brake pedal by the driver. If no further braking is applied to a wheel as a result of the algorithm discussed in this specification, this does not necessarily mean that no braking at all is applied to that wheel.

It is envisaged that a vehicle electronic control unit (ECU) may be provided including an algorithm in accordance with the above-described invention, to control (among other things) the braking applied to wheels of a vehicle in which the ECU is incorporated.

In this document, where the term "slip angle" is used this refers to the slip angle at a particular wheel/tyre, and should be understood in this context. This is not to be confused with the slip angle for the vehicle overall, which is not calculated in this document.

**Claims**

1. A method to reduce the likelihood of over-steer in a vehicle (1) during a turn, the method, comprising the steps of:

   detecting that a vehicle (1) is negotiating a turn in a manner that may result in an over-steer situation;
   determining inner and outer wheels of the vehicle (1), the inner wheels of the vehicle (1) being those on the side towards which the vehicle (1) is turning;
   determining the slip ratio of the front outer wheel and the slip ratio of the rear outer wheel; and
   if the slip ratio of the rear outer wheel is below a first threshold, then:

      if the slip ratio of the front outer wheel is below a second threshold, applying additional braking to the front outer wheel only, without also applying additional braking at the rear outer wheel; or
      if the slip ratio of the front outer wheel is above the second threshold, applying additional braking both to the front outer wheel and to the rear outer wheel.

2. A method according to claim 1, wherein the first and/or the second threshold corresponds to a slip angle for a wheel that occurs when the ratio of lateral force in a first direction to slip angle of the wheel is proportional to the ratio of lateral force in a second direction to slip angle of the wheel, where the first direction is orthogonal to the second direction;
   wherein the lateral force in the first direction is in a direction which will tend to reduce the forward speed of the vehicle (1).

3. A method according to claim 2, wherein the first and/or the second threshold corresponds to, or is at least approximately, the largest slip angle for which the ratio of lateral force in a first direction to slip angle of the wheel is proportional to the ratio of lateral force in a second direction to slip angle of the wheel, where the first direction is orthogonal to the second direction.

4. A method according to any preceding claim wherein the first threshold is around 5-20%.

5. A method according to any preceding claim, wherein the second threshold is around 50-70%.

**6.** A method according to any preceding claim wherein, when it is detected that the vehicle (1) is negotiating a turn in a manner that may result in an over-steer situation, the slip ratios of the forward and rear outer wheels are determined periodically or continuously and additional braking is applied based on the determined slip ratios.

**7.** A method according to any preceding claim wherein, when additional braking is applied to the front outer wheel and/or the rear outer wheel, braking is applied to the wheel so that the value of slip ratio at the wheel reaches a value which is equal or approximately equal to the first or second threshold.

**8.** A method according to claim 7, wherein the slip ratio at the wheel is monitored and the level of additional braking is increased or decreased in response to the determined slip ratio to maintain the value of slip ratio at the wheel to be equal or approximately equal to the first or second threshold.

**9.** A computer program comprising computer program means adapted to carry out all of the steps of any one of the preceding claims when the program is run on a computer.

**10.** A computer comprising a computer program according to claim 9.

**11.** A computer according to claim 10, wherein the computer is a vehicle ECU.

**12.** A vehicle (1) comprising a computer according to claim 10 or 11.


**Patentansprüche**

**1.** Verfahren zur Verringerung der Wahrscheinlichkeit des Übersteuerns eines Fahrzeugs (1) in einer Kurve, wobei das Verfahren die folgenden Schritte umfasst:

Erkennen, dass ein Fahrzeug (1) eine Kurve auf eine Weise befährt, die in einer Übersteuerungssituation resultieren kann;
Ermitteln von Innen- und Außenrädern des Fahrzeugs (1), wobei die Innenräder des Fahrzeugs (1) diejenigen auf der Seite sind, der sich das Fahrzeug (1) zuwendet;
Ermitteln des Schlupfverhältnisses des vorderen Außenrads und des Schlupfverhältnisses des hinteren Außenrads; und
wenn das Schlupfverhältnis des hinteren Außenrads unterhalb einer ersten Schwelle liegt, dann:

wenn das Schlupfverhältnis des vorderen Außenrads unterhalb einer zweiten Schwelle liegt, Anwenden von zusätzlicher Bremsung nur auf das vordere Außenrad, ohne auch zusätzliche Bremsung am hinteren Außenrad anzuwenden; oder
wenn das Schlupfverhältnis des vorderen Außenrads oberhalb der zweiten Schwelle liegt, Anwenden von zusätzlicher Bremsung sowohl auf das vordere Außenrad als auch auf das hintere Außenrad.

**2.** Verfahren nach Anspruch 1, worin die erste und/oder die zweite Schwelle einem Schräglaufwinkel für ein Rad entspricht, der auftritt, wenn das Verhältnis von Seitenkraft in einer ersten Richtung zum Schräglaufwinkel des Rads proportional zum Verhältnis von Seitenkraft in einer zweiten Richtung zum Schräglaufwinkel des Rads ist, wobei die erste Richtung orthogonal zur zweiten Richtung ist;
worin die Seitenkraft in der ersten Richtung in einer Richtung verläuft, die dazu neigt, die Vorwärtsgeschwindigkeit des Fahrzeugs (1) zu verringern.

**3.** Verfahren nach Anspruch 2, worin die erste und/oder die zweite Schwelle dem größten Schräglaufwinkel, bei dem das Verhältnis von Seitenkraft in einer ersten Richtung zum Schräglaufwinkel des Rads proportional zum Verhältnis von Seitenkraft in einer zweiten Richtung zum Schräglaufwinkel des Rads ist, entspricht oder zumindest angenähert ist, wobei die erste Richtung orthogonal zur zweiten Richtung ist.

**4.** Verfahren nach einem vorhergehenden Anspruch, worin die erste Schwelle rund 5-20 % ist.

**5.** Verfahren nach einem vorhergehenden Anspruch, worin die zweite Schwelle rund 50-70 % ist.

**6.** Verfahren nach einem vorhergehenden Anspruch, worin, wenn erkannt wird, dass das Fahrzeug (1) eine Kurve auf eine Weise befährt, die in einer Übersteuerungssituation resultieren kann, die Schlupfverhältnisse der vorderen und hinteren Außenräder periodisch oder kontinuierlich ermittelt werden und zusätzliche Bremsung auf Basis der ermittelten Schlupfverhältnisse angewandt wird.

**7.** Verfahren nach einem vorhergehenden Anspruch, worin, wenn zusätzliche Bremsung auf das vordere Außenrad und/oder das hintere Außenrad angewandt wird, Bremsung auf das Rad angewandt wird, sodass der Schlupfverhältniswert am Rad einen Wert erreicht, der gleich oder ungefähr gleich der ersten oder zweiten Schwelle ist.

**8.** Verfahren nach Anspruch 7, worin das Schlupfverhältnis am Rad überwacht wird und das Niveau der zusätzlichen Bremsung als Reaktion auf das ermittelte Schlupfverhältnis erhöht oder verringert wird, um den Schlupfverhältniswert am Rad gleich oder ungefähr gleich der ersten oder zweiten Schwelle zu halten.

**9.** Computerprogramm umfassend Computerprogrammmittel, die ausgelegt sind, um alle Schritte nach einem der vorhergehenden Ansprüche auszuführen, wenn das Programm auf einem Computer läuft.

**10.** Computer umfassend ein Computerprogramm nach Anspruch 9.

**11.** Computer nach Anspruch 10, worin der Computer eine Fahrzeug-ECU ist.

**12.** Fahrzeug (1) umfassend einen Computer nach Anspruch 10 oder 11.

**Revendications**

**1.** Un procédé destiné à réduire la probabilité de survirage d'un véhicule (1) au cours d'un virage, le procédé comprenant les étapes consistant à :

détecter qu'un véhicule (1) négocie un virage d'une manière qui peut résulter dans une situation de survirage ;
déterminer des roues extérieures et intérieures du véhicule (1), les roues intérieures du véhicule (1) étant celles qui sont du côté vers lequel le véhicule (1) est en train de tourner ;
déterminer le taux de glissement de la roue extérieure avant et le taux de glissement de la roue extérieure arrière ; et
si le taux de glissement de la roue extérieure arrière est au-dessous d'un premier seuil, alors :

si le taux de glissement de la roue extérieure avant est au-dessous d'un deuxième seuil, appliquer un freinage supplémentaire à la roue extérieure avant uniquement, sans aussi appliquer un freinage supplémentaire à la roue extérieure arrière ; ou
si le taux de glissement de la roue extérieure avant est au-dessus du deuxième seuil, appliquer un freinage supplémentaire à la fois à la roue extérieure avant et à la roue extérieure arrière.

**2.** Un procédé selon la revendication 1, dans lequel le premier et/ou le deuxième seuil correspond à un angle de glissement d'une roue qui se présente quand le rapport de la force latérale dans une première direction à l'angle de glissement de la roue est proportionnel au rapport de la force latérale dans une deuxième direction à l'angle de glissement de la roue, où la première direction est perpendiculaire à la deuxième direction ;
dans lequel la force latérale dans la première direction est dans une direction qui tend à réduire la vitesse d'avancement du véhicule (1).

**3.** Un procédé selon la revendication 2, dans lequel le premier et/ou le deuxième seuil correspond à, ou est au moins approximativement, le plus grand angle de glissement pour lequel le rapport de la force latérale dans une première direction à l'angle de glissement de la roue est proportionnel au rapport de la force latérale dans une deuxième direction à l'angle de glissement de la roue, où la première direction est perpendiculaire à la deuxième direction.

**4.** Un procédé selon l'une quelconque des revendications précédentes dans lequel le premier seuil est environ 5-20%.

**5.** Un procédé selon l'une quelconque des revendications précédentes, dans lequel le deuxième seuil est environ 50-70%.

**6.** Un procédé selon l'une quelconque des revendications précédentes dans lequel, quand il est détecté que le véhicule (1) négocie un virage d'une manière qui peut résulter dans une situation de survirage, les taux de glissement des roues extérieures avant et arrière sont déterminés périodiquement ou continuellement et un freinage supplémentaire est appliqué sur la base des taux de glissement déterminés.

7. Un procédé selon l'une quelconque des revendications précédentes dans lequel, quand un freinage supplémentaire est appliqué à la roue extérieure avant et/ou la roue extérieure arrière, le freinage est appliqué à la roue de sorte que la valeur de taux de glissement à la roue atteint une valeur qui est égale ou approximativement égale au premier ou au deuxième seuil.

8. Un procédé selon la revendication 7, dans lequel le taux de glissement à la roue est surveillé et le niveau de freinage supplémentaire est augmenté ou diminué en réponse au taux de glissement déterminé pour maintenir la valeur de taux de glissement à la roue égale ou approximativement égale au premier ou au deuxième seuil.

9. Un programme informatique comprenant un moyen de programme informatique adapté pour effectuer toutes les étapes de l'une quelconque des revendications précédentes quand le programme est exécuté sur un ordinateur.

10. Un ordinateur comprenant un programme informatique selon la revendication 9.

11. Un ordinateur selon la revendication 10, dans lequel l'ordinateur est un ECU de véhicule.

12. Un véhicule (1) comprenant un ordinateur selon la revendication 10 ou 11.

FIG 1

FIG   2

FIG   3

FIG   4

EP 2 939 889 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19832484
- US 6223116 B